(19) Europäisches Patentamt
European Patent Office
Office européen des brevets

(11) **EP 3 084 995 B1**

(12) **FASCICULE DE BREVET EUROPEEN**

(45) Date de publication et mention de la délivrance du brevet:
**19.06.2019 Bulletin 2019/25**

(21) Numéro de dépôt: **14830982.6**

(22) Date de dépôt: **18.12.2014**

(51) Int Cl.:
***H04L 1/00*** *(2006.01)*

(86) Numéro de dépôt international:
**PCT/FR2014/053432**

(87) Numéro de publication internationale:
**WO 2015/092302 (25.06.2015 Gazette 2015/25)**

(54) **PROCÉDÉ DE TRANSMISSION D'UN SIGNAL NUMÉRIQUE POUR UN SYSTÈME MARC A UN RELAIS HALF-DUPLEX DYNAMIQUE, PRODUIT PROGRAMME ET DISPOSITIF RELAIS CORRESPONDANTS**

VERFAHREN ZUR ÜBERTRAGUNG EINES DIGITALEN SIGNALS FÜR EIN MARC-SYSTEM MIT EINEM DYNAMISCHEN HALB-DUPLEX RELAIS SOWIE ENTSPRECHENDES COMPUTERPROGRAMM UND ENTSPRECHENDE RELAISVORRICHTUNG

METHOD FOR TRANSMISSION OF A DIGITAL SIGNAL FOR A MARC SYSTEM WITH A DYNAMIC HALF-DUPLEX RELAY, CORRESPONDING COMPUTER PROGRAM AND RELAY APPARATUS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.12.2013 FR 1363306**

(43) Date de publication de la demande:
**26.10.2016 Bulletin 2016/43**

(73) Titulaire: **Orange**
**75015 Paris (FR)**

(72) Inventeurs:
• **MOHAMAD, Abdulaziz**
**F-91190 Gif Sur Yvette (FR)**
• **VISOZ, Raphaël**
**F-92170 Vanves (FR)**
• **BERTHET, Antoine**
**F-92290 Chatenay Malabry (FR)**

(56) Documents cités:
**WO-A1-2012/022905 WO-A1-2013/093359**

• **ATOOSA HATEFI ET AL: "Full Diversity Distributed Coding for the Multiple Access Half-Duplex Relay Channel", NETWORK CODING (NETCOD), 2011 INTERNATIONAL SYMPOSIUM ON, IEEE, 25 juillet 2011 (2011-07-25), pages 1-6, XP031928315, DOI: 10.1109/ISNETCOD.2011.5979061 ISBN: 978-1-61284-138-0**
• **MARWAN H AZMI ET AL: "Design of distributed multi-edge type LDPC codes for multiple access relay channels", COMMUNICATIONS THEORY WORKSHOP (AUSCTW), 2011 AUSTRALIAN, IEEE, 31 janvier 2011 (2011-01-31), pages 118-123, XP031929420, DOI: 10.1109/AUSCTW.2011.5728748 ISBN: 978-1-4244-9714-0**

**Description**

**Domaine de l'invention**

Le domaine de l'invention est celui de la transmission de données codées dans un réseau MARC. Un réseau MARC est un système de télécommunication à au moins quatre noeuds comprenant au moins deux sources (émetteurs), un relais et un destinataire (récepteur). Plus précisément, l'invention se rapporte au codage de réseau et elle concerne l'amélioration de la qualité de la transmission des données, et en particulier l'amélioration des performances du décodage correcteur d'erreurs dans un récepteur.

L'invention s'applique notamment, mais non exclusivement, à la transmission de données via des réseaux mobiles, par exemple pour des applications temps réel.

**Art antérieur**

Les réseaux, en particulier mobiles, sont à la recherche de gains significatifs en termes de capacité, de fiabilité, de consommation et autres. Le canal de transmission d'un réseau mobile est réputé difficile et conduit à une fiabilité de transmission relativement médiocre. Des progrès importants ont été réalisés ces dernières années, en matière de codage et de modulation, notamment pour des considérations de consommation et de capacité. En effet, dans un réseau mobile où plusieurs émetteurs/récepteurs partagent les mêmes ressources (temps, fréquence et espace) il faut réduire au maximum la puissance d'émission.

Cette réduction va à l'encontre de la couverture et donc de la capacité du système et plus généralement de ses performances.

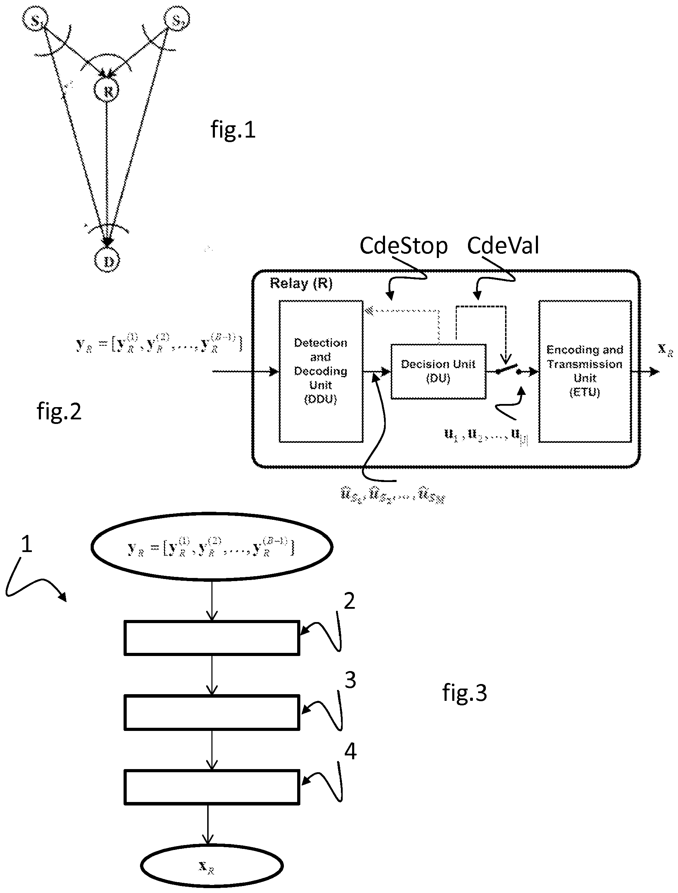

Pour augmenter la couverture, fiabiliser les communications et plus généralement améliorer les performances, une approche consiste à s'appuyer sur des relais pour augmenter l'efficacité spectrale et donc améliorer l'efficacité de transmission et la fiabilité des systèmes. La topologie des systèmes MARC illustrée par la figure 1 est telle que les sources, noeuds $S_1$ et $S_2$, diffusent leurs séquences d'informations codées à l'attention du relais R et du destinataire D. Le relais décode les signaux reçus issus des sources $S_1$ et $S_2$ et ré-encode conjointement ceux-ci en ajoutant une redondance propre créant un code de réseau spatialement distribué. A la destination D, le décodage des trois séquences codées spatialement distribuées, comprenant les deux séquences codées reçues issues directement des sources S1 et S2 et la séquence codée issue du relais, repose sur des algorithmes de décodage conjoint canal/ réseau.

Le codage de réseau est une forme de coopération selon laquelle les noeuds du réseau partagent non seulement leurs ressources propres (puissance, bande, etc.) mais également leur capacité de calcul, pour créer un codage distribué de plus en plus puissant au fur et à mesure que l'information se propage à travers les noeuds. Il amène des gains substantiels en termes de diversité et de codage et donc de fiabilité de transmission.

Pour un système MARC, on considère que le débit bits/s des sources et du relais est 1/Ts et que la durée de transmission totale disponible est fixée à T. Ainsi, le nombre d'utilisations du canal (channel uses) disponibles pouvant être partagées entre les sources et le relais est N=DT. Si on considère le cas du débit de Nyquist et d'une transmission d'un pulse dont la forme est celle d'un sinus cardinal alors N est le nombre total de dimensions complexes disponibles et D est la bande totale disponible du système.

On distingue deux types de fonctionnement pour le relais : le mode half-duplex et le mode full-duplex.

Selon le mode half-duplex connu, on distingue deux phases de transmission qui correspondent à des utilisations du canal de transmission différentes car le relais est incapable de recevoir et d'émettre simultanément. Les sources et le relais partagent donc le nombre total d'utilisations du canal de transmission en deux correspondants aux deux phases. Pendant la première phase qui comprend les 1ères utilisations du canal de transmission (time slots), les deux sources émettent mais pas le relais. Le relais décode/ré-encode conjointement pour déduire le signal à émettre lors des prochaines utilisations du canal de transmission. Pendant la deuxième phase qui comprend les 2e utilisations du canal de transmission, le relais émet le signal déterminé pendant les 1ères utilisations du canal de transmission et les sources émettent les deuxièmes séquences de parité relatives aux mêmes informations que celles émises pendant les 1ères utilisations du canal de transmission. Le relais respecte donc un certain cadencement fixé par la durée de la deuxième phase. Les relais de type half-duplex sont attractifs du fait d'un schéma de communication simple et du fait de la facilité de les mettre en oeuvre et de leur coût réduit qui en découlent.

La demande de brevet PCT WO2012/022905 A1 au nom du même demandeur décrit un relais half duplex qui fonctionne selon le cadencement précédent en deux phases pour un système MARC avec liens non orthogonaux. Le relais met en oeuvre un procédé de relayage qui ne transmet pas les mots décodés avec erreur selon une technique dite SDF Selective Decode and Forward. Selon cette technique, le relais tente de décoder les messages des sources et transmet le résultat d'une fonction déterministe des seuls messages détectés sans erreur. Cette détection d'erreur est effectuée au moyen d'un contrôle du CRC (Cyclic Redundancy Check) qui est inclus dans les messages sources.

La demande de brevet PCT WO2013/093359 A1 décrit un relayage sélectif avec un même cadencement en deux phases dans un système MARC à plusieurs relais.

Bien que la technique de relayage sélective présente des avantages indéniables en évitant la propagation d'erreur par le relais, son utilisation avec un relais half duplex a pour inconvénient de nécessiter que le relais et les sources déterminent et connaissent les durées respectives des deux phases de transmission.

## Caractéristiques principales de l'invention

L'invention a pour objet un procédé de relayage d'un signal numérique destiné à un réseau à au moins quatre noeuds comprenant deux sources (émetteurs), un relais et une destination (récepteur) séparés entre eux par des liens. Le procédé de relayage est mis en oeuvre par un relais half-duplex destiné à un système de télécommunication comprenant plusieurs sources, le relais et un destinataire. Le procédé comprend :

- une phase de réception de mots de code émis par les sources pendant N utilisations du canal, les mots de code successifs émis par une source correspondant à B blocs dont le premier bloc peut être décodé de manière indépendante des autres blocs, comprenant une étape de décodage pour estimer par source à partir de mots de code reçus un message associé aux mots de code émis par la source,
- une étape de détection d'erreur et de décision par le relais des messages décodés sans erreurs et
- une phase de codage et de transmission vers le destinataire d'un signal représentatif des seuls messages décodés sans erreur.

Le procédé est remarquable en ce que le relais passe d'une réception non sélective à une réception sélective après la réception de B1 blocs et bascule de la phase de réception à la phase de codage et de transmission sous contrôle de l'étape de détection d'erreur et de décision, $1 \leq B1 < B - 1$, $B > 2$.

L'invention a en outre pour objet un relais half duplex destiné à un système de télécommunication comprenant plusieurs sources, le relais et un destinataire, pour la mise en oeuvre d'un procédé de relayage. Le relais half duplex comprend :

- un moyen de décodage pour estimer par source, à partir de mots reçus correspondant à des mots de code émis par les sources pendant N utilisations du canal, les mots de code successifs émis par une source correspondant à B blocs dont le premier bloc peut être décodé de manière indépendante des autres blocs, un message associé aux mots de code émis par la source,
- un moyen de codage et de transmission.

Le relais est remarquable en ce qu'il comprend un moyen de décision des messages décodés sans erreur pour faire passer le relais d'une réception non sélective à une réception sélective après la réception de B1 blocs et pour basculer un moyen de basculement des messages décodés sans erreur vers le moyen de codage et de transmission, $1 \leq B1 < B - 1$, $B > 2$.

Le relais half duplex selon l'invention a un fonctionnement dynamique et non fixe, il est capable d'adapter son fonctionnement en fonction des erreurs de décodage des messages reçus provenant de plusieurs sources.

En dessous du seuil B1 du nombre d'utilisations du canal de transmission écoulées, le relais reste dans un mode d'écoute non sélective. Dans ce mode, le relais tente de détecter et de décoder sans erreur les messages de toutes les sources. Dès que le nombre d'utilisations du canal écoulées passe le seuil B1, le relais passe dans un mode d'écoute sélective. Dans ce mode, le relais bascule d'une phase d'écoute pendant laquelle il tente de détecter et de décoder sans erreur les messages des sources à une phase de codage et de transmission vers le destinataire dès qu'un message est décodé sans erreur. Ainsi, le relais passe d'une écoute non sélective à une écoute sélective si le temps écoulé dépasse le seuil B1 qui est un paramètre du système. Le seuil B1 permet ainsi de ne pas pénaliser des sources qui nécessitent un temps de décodage plus long qu'une source dont le lien source-relais est nettement meilleur que les liens source-relais des autres sources. Le paramétrage du seuil B1 permet ainsi d'introduire une flexibilité de fonctionnement du système MARC qui permet une adaptation du relais à des environnements différents entre les sources. B1 peut être variable, par exemple à chaque mot de code de B blocs ou en fonction d'un nombre de mots de code. Le temps d'écoute du relais n'est pas fixe contrairement aux techniques connues mettant en oeuvre un relais half duplex dans un système MARC. Cette flexibilité permet d'une part une adaptation à une variation instantanée de qualité des liens sources-relais ce que ne permet pas les techniques connues. D'autre part, dans l'éventualité où le lien entre une des sources et le relais est très mauvais, l'allongement du temps d'écoute non sélective peut permettre finalement au relais de décoder cette source et de transmettre vers la destination un signal représentatif des messages de toutes les sources. En outre, même si le décodage de cette source ne peut se faire sans erreur, le relais peut quand même aider la destination en transmettant un signal représentatif des messages des autres sources décodés sans erreur après passage dans le mode d'écoute sélective. Par ailleurs, ce fonctionnement est totalement transparent pour les sources ;

seul le relais adapte son mode d'écoute.

Ainsi, l'invention repose en particulier sur la distinction de deux modes d'écoute du relais, un mode d'écoute totale et un mode d'écoute sélective. Pendant le mode d'écoute totale le relais attend de décoder sans erreur les messages de toutes les sources à partir, pour une source, de tout ou partie des mots de code reçus émis par cette source avant de transmettre après codage les messages décodés sans erreur. Après le passage du mode d'écoute totale au mode d'écoute sélective, le relais transmet après codage, le premier message décodé sans erreur. Le basculement d'une phase d'écoute à une phase de codage et de transmission intervient donc de manière dynamique et non plus fixe comme dans le procédé de relayage sélectif connu. Cette souplesse dans le basculement permet d'adapter le fonctionnement du relais à la qualité du canal entre les sources et le relais ce qui n'est pas le cas si la durée d'écoute du relais est fixe par rapport à la durée de transmission des sources. Contrairement au procédé de relayage sélectif connu, l'invention distingue deux modes d'écoute qui augmentent la probabilité de pouvoir décoder sans erreur plusieurs sources même quand un des liens sources relais est de qualité bien meilleure que les autres liens.

Selon un mode de réalisation, les sources émettant simultanément sur une même ressource radio, l'étape de décodage est itérative et comprend une détection conjointe et un décodage conjoint.

L'émission par les sources intervient de manière simultanée sur une même ressource radio (temps et fréquence) ce qui permet d'utiliser au maximum la ressource spectrale commune ; les liens sources relais sont non orthogonaux. Il y a donc interférence entre les signaux reçus par le relais et la destination du fait de la superposition des signaux sources lors de la transmission d'une part entre les sources et le relais et d'autre part entre les sources et la destination. Dans le cas où les sources émettent simultanément mais sur des ressources spectrales différentes, l'étape de détection et de décodage conjoint itératif n'est pas nécessaire au relais. Dans ce cas, le relais peut décoder chaque message des sources à partir de séquences reçues sans interférence entre les sources.

Selon un mode de réalisation, parmi les B blocs émis successivement par une source, l'accumulation des blocs de 1 à b est un mot de code d'un code dont le rendement diminue avec b, $1 \le b \le B$.

Selon un mode de réalisation, la phase de codage et de transmission comprend un codage réseau qui est une fonction surjective non bijective appliquée sur les messages décodés sans erreur.

Selon un mode de réalisation, la fonction surjective non bijective est un ou exclusif des messages décodés sans erreur.

Selon un mode de réalisation, le code à redondance incrémentale est un turbo code poinçonné à rendement variable.

Selon un mode de réalisation, le code à redondance incrémentale est un code convolutionnel poinçonné à rendement variable.

Selon un mode de réalisation, le code à redondance incrémentale est un code LDPC à rendement variable.

Selon un mode de réalisation, lorsque la décision de messages décodés sans erreur intervient après la $T^e$ utilisation du canal de transmission alors le relais détermine un ordre de modulation $q_r$ et une longueur de codage de

$$n_r = q_r \left( N - \sum_{i=1}^{T} N_i \right)$$

canal utilisés par l'étape de codage et de transmission qui vérifient l'équation :                avec $N_i$ les T premières utilisations du canal successives parmi les N utilisations du canal.

Selon un mode de réalisation, l'étape de décision de messages décodés sans erreurs est effectuée au moyen d'un code de type CRC.

Selon un mode de réalisation, la phase de codage et de transmission comprend un codage canal tel que le mot de code codé canal est entrelacé par bloc, chaque bloc du mot de code étant entrelacé par un entrelaceur distinct entre les blocs, et dans lequel la phase de codage et de transmission comprend en outre une sélection de blocs parmi les blocs du mot de code après entrelacement pour adapter la longueur du mot de code à transmettre au nombre restant d'utilisations du canal après le basculement du relais de la phase de réception à la phase de codage et de transmission.

Selon un mode de réalisation, le moyen de codage et de transmission comprend un moyen de modulation et un moyen de codage canal et lorsque le moyen de décision prend une décision de basculement après la $T^e$ utilisation du canal alors le relais détermine un ordre de modulation $q_r$ du moyen de modulation et une longueur de codage de

$$n_r = q_r \left( N - \sum_{i=1}^{T} N_i \right)$$

canal du moyen de codage canal qui vérifient l'équation :                avec $N_i$ les T premières utilisations du canal parmi les N utilisations du canal successives.

Les différents modes de réalisation précédents peuvent être combinés ou pas avec un ou plusieurs de ces modes pour définir un autre mode de réalisation.

L'invention a en outre pour objet un système MARC, éventuellement MIMO, adapté pour la mise en oeuvre d'un procédé selon l'invention.

Ainsi, un système MARC selon l'invention, comprend un relais selon l'invention.

Selon une implémentation préférée, les étapes du procédé de relayage sont déterminées par les instructions d'un programme de relayage incorporé dans un ou plusieurs circuits électronique telles des puces elle-même pouvant être disposées dans des dispositifs électroniques du système MARC. Le procédé de relayage selon l'invention peut tout aussi bien être mis en oeuvre lorsque ce programme est chargé dans un organe de calcul tel un processeur ou équivalent dont le fonctionnement est alors commandé par l'exécution du programme.

En conséquence, l'invention s'applique également à un programme d'ordinateur, notamment un programme d'ordinateur sur ou dans un support d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter un procédé selon l'invention.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

Alternativement, le support d'informations peut être un circuit intégré dans lequel le programme est incorporé, le circuit étant adapté pour exécuter ou pour être utilisé dans l'exécution du procédé en question.

D'autre part, le programme peut être traduit en une forme transmissible telle qu'un signal électrique ou optique, qui peut être acheminé via un câble électrique ou optique, par radio ou par d'autres moyens. Le programme selon l'invention peut être en particulier téléchargé sur un réseau de type Internet.

**Liste des figures**

D'autres caractéristiques et avantages de l'invention apparaîtront plus clairement à la lecture de la description suivante de modes de réalisation préférentiels, donnés à titre de simples exemples illustratifs et non limitatifs, et des dessins annexés, parmi lesquels :

- la figure 1 est un schéma illustrant la topologie de base des systèmes MARC avec deux sources, un relais et une destination, décrite dans la partie art antérieur,
- la figure 2 est un schéma d'un relais selon l'invention,
- la figure 3 est un organigramme simplifié représentant le séquençage des opérations au relais selon l'invention,
- la figure 4 est un schéma d'une source selon l'invention,
- la figure 5 est un schéma du module DDU de détection et de décodage conjoint itératif d'un relais selon l'invention,
- la figure 6 représente un exemple de mise en oeuvre du séquençage au relais lorsque le relais décode une des sources pendant le mode d'écoute non sélective et lorsque le relais décode l'autre source avec succès uniquement après être passé dans le mode d'écoute sélective, dans un contexte à deux sources,
- la figure 7 représente un exemple de mise en oeuvre du séquençage au relais lorsque le relais décode une source avec succès uniquement après être passé dans le mode d'écoute sélective, dans un contexte à deux sources,
- la figure 8 est un schéma du module de codage et de transmission ETU d'un relais selon l'invention,
- la figure 9 est un schéma d'une fonction de codage réseau du module d'encodage et de transmission ETU d'un relais selon l'invention destiné à un système MARC à un relais,
- les figures 10 et 11 sont des schémas du décodeur conjoint canal-réseau de la destination selon l'invention,
- la figure 12 représente un exemple d'une mise en oeuvre d'un procédé selon l'invention dans le contexte d'un système MARC avec deux relais lorsque le relais R2 bénéficie du signal transmis par le relais R1 qui a estimé les signaux des deux sources S1 et S2 après la réception du bloc B1,
- la figure 13 est un schéma du module DDU de détection et de décodage conjoint itératif d'un relais selon l'invention,
- la figure 14 est un schéma du module d'encodage et de transmission ETU d'un relais selon l'invention,
- la figure 15 est un schéma d'une fonction de codage réseau du module d'encodage et de transmission ETU d'un relais selon l'invention destiné à un système MARC à plusieurs relais.

**Description de modes de réalisation particuliers**

Il n'y a aucune contrainte sur le canal de transmission ; il peut être à évanouissement rapide (fast fading) ou lent (slow fading), il peut être sélectif en fréquence, et il peut être MIMO. Dans la suite de la description, les noeuds du système MARC sont supposés parfaitement synchronisés et les sources sont indépendantes (il n'y a pas de corrélation entre elles).

L'invention se place dans le contexte d'un système MARC à M sources $S_1$, $S_2$, ..., $S_M$, un ou plusieurs relais R et une destination D. Les sources et les relais sont supposés équipés d'une antenne d'émission à des fins de simplification de la description. Il est bien entendu que les sources et les relais peuvent être équipés de plusieurs antennes d'émission. Les relais et la destination sont supposés équipés d'une antenne de réception à des fins de simplification de la description, il est bien entendu qu'ils peuvent être équipés de plusieurs antennes.

La topologie de base d'un système MARC est illustré par la figure 1, ce système a deux sources et un relais. Les sources sont par exemples des utilisateurs qui cherchent à transmettre des messages à une destination commune qui est par exemple une station de base d'un réseau d'accès mobile. Les sources s'aident d'un relais qui peut être une station de base allégée ou par exemple une des sources dans le cas où cette dernière est sur le chemin entre les sources et la station de base.

Selon une utilisation particulière, les deux sources correspondent à deux terminaux mobiles. Selon une autre utilisation, les deux sources peuvent correspondre à deux services différents accessibles depuis un même terminal mais dans ce cas, le terminal est équipé d'au moins deux antennes qui déterminent deux canaux de propagation différents entre le terminal et le relais et entre le terminal et la destination.

Chaque cycle de transmission est décomposé en N utilisations du canal ou intervalles de transmission. La durée d'un cycle dépend du paramétrage du système MARC et en particulier de la couche MAC selon le découpage en 7 couches de l'OSI.

Un cycle correspond au temps pendant lequel une source transmet un message de k bits d'information. Dans l'exemple décrit, les sources transmettent simultanément leur propre message de k bits d'information pendant les N utilisations du canal. Une information de type CRC est incluse à chaque message de k bits transmis par une source et est utilisée pour déterminer si un message reçu est correctement décodé.

L'invention propose une nouvelle approche de l'utilisation du ou des relais d'un système MARC pour améliorer l'efficacité spectrale de la transmission.

Un procédé de relayage selon l'invention est mis en oeuvre par le au moins un relais half-duplex destiné au système MARC. Ce relais R selon l'invention est illustré par la figure 2. Le relais comprend un module de détection et de décodage conjoint itératif DDU suivi d'un module de décision DU et d'un module de codage et de transmission ETU. Un organigramme du procédé mis en oeuvre par le relais R est illustré par la figure 3. Le procédé 1 comprend une phase 2 de réception, une étape 3 de détection d'erreurs et de décision et une phase 4 de codage et de transmission.

$\mathbb{F}_2$ est le corps de Galois à deux éléments, $\mathbb{R}$ est le corps des réels et $\mathbb{C}$ est le corps des complexes.

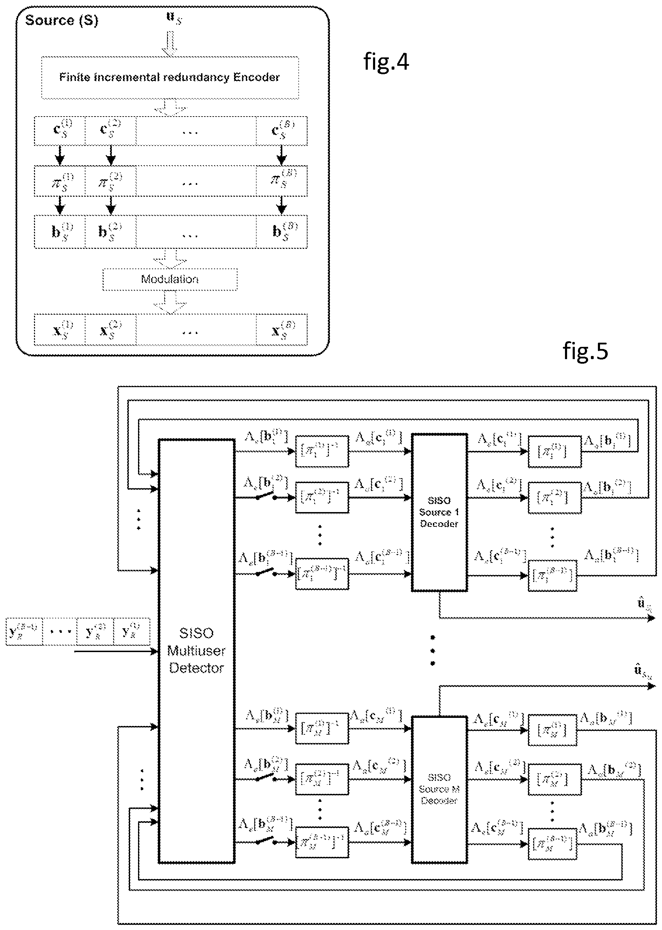

Chaque source S, illustrée par la figure 4, parmi les M sources $\{S_1, S_2, ..., S_M\}$ du système MARC a un message $\mathbf{u}_S$ comportant k bits d'information à transmettre,

$$\mathbf{u}_S \in \mathbb{F}_2^k.$$

Le message $\mathbf{u}_S$ comprend un code de type CRC qui permet de vérifier l'intégrité du message $\mathbf{u}_S$.

Les sources $\{S_1, S_2, ..., S_M\}$ statistiquement indépendantes effectuent un codage du message $\mathbf{u}_S$ au moyen d'un code à redondance incrémentale et transforment le message $\mathbf{u}_S$ en $n_S$ bits notés

$$\mathbf{c}_S \in \mathbb{F}_2^{n_S}.$$

Le mot $\mathbf{c}_S$ de code obtenu est segmenté en B blocs de redondance notés

$$\mathbf{c}_S^{(i)} \in \mathbb{F}_2^{n_{S,i}}$$

avec $i = 1, 2, ..., B$. Chaque bloc comprend $n_{S,i}$ bits, $n_S = \sum_{i=1}^{B} n_{S,i}$. Le code à redondance incrémentale peut être de type systématique, les bits d'information sont alors inclus dans le premier bloc : $\mathbf{u}_S \in \mathbf{c}_S^{(1)}$. Que le code à redondance incrémentale soit ou pas de type systématique, il est tel que le premier bloc $\mathbf{c}_S^{(1)}$ parmi les B blocs peut être décodé de manière indépendante des autres blocs. Le rendement de codage le plus élevé est $k/n_{S,1}$ et il ne peut pas être plus grand que un, $n_{S,1} \geq k$. Le rendement de codage minimum pour une source S est $k/n_S$. Chaque bloc $\{\mathbf{c}_S^{(i)} : 1 < i \leq B\}$ après le premier bloc comprend des bits de parité qui ajoutent une redondance au premier bloc, chacun des blocs $\{\mathbf{c}_S^{(i)} : 1 < i \leq B\}$ peut être décodé conjointement avec les blocs 1 à i-1. Le code à redondance incrémentale appartient par exemple à la liste non exhaustive suivante : code raptor (RC), turbo code poinçonné de rendement compatible (rate compatible punctured turbo code, RCPTC), code convolutionnel poinçonné de rendement compatible (rate compatible punctured convolutional code, RCPCC), LDPC de rendement compatible (rate compatible low density check code).

Chaque mot de code ou bloc $\mathbf{c}_S^{(i)}$ est entrelacé par un entrelaceur distinct noté $\pi_S^{(i)}$, le mot de code après entrelacement est noté $\mathbf{b}_S=[\mathbf{b}_S^{(1)}, \mathbf{b}_S^{(2)}, ..., \mathbf{b}_S^{(B)}]$. Les entrelaceurs permettent de lutter contre les évanouissements qui peuvent intervenir lors de la transmission par le canal et de donner à chaque source une empreinte qui facilite la séparation des sources par le relais et par la destination. Chaque partie entrelacée $\mathbf{b}_S^{(i)}$ du mot de code est modulée pour obtenir un mot de code complexe $\mathbf{x}_S=[\mathbf{x}_S^{(1)}, \mathbf{x}_S^{(2)}, ..., \mathbf{x}_S^{(B)}]$ avec $\mathbf{x}_S^{(i)} \in \mathcal{X}^{N_i}, \ i = 1,2,...,B$ où $\mathcal{X} \subset \mathbb{C}$ désigne un signal complexe de cardinalité $|X| = 2^{q_s}$ et où $N_i = n_{S,i}/q_S$.

Chaque source S parmi les M sources $\{S_1,S_2,...,S_M\}$ peut utiliser un rendement minimum de codage $k/n_S$ et un ordre de modulation $q_s$ différents de ceux des autres sources dans la mesure où le nombre d'utilisations du canal par chaque partie du mot de code complexe émis est identique entre les sources : $n_{S,i}/q_S = N_i, i = 1,2, ...,B.$

Chaque source S émet le mot de code $\mathbf{x}_S=[\mathbf{x}_S^{(1)}, \mathbf{x}_S^{(2)}, ..., \mathbf{x}_S^{(B)}]$ composé de B blocs pendant N utilisations du canal de transmission. Quel que soit i, $1 \leq i \leq B$, la concaténation (ou accumulation) des blocs 1 à i est elle-même un mot de code puisque issue du codeur à redondance incrémentale.

La phase 2 de réception est mise en oeuvre par le module DDU de détection et de décodage conjoint itératif du relais. Cette étape comprend une étape de détection et de décodage conjoint itératif du mot de code $\mathbf{x}_S=[\mathbf{x}_S^{(1)}, \mathbf{x}_S^{(2)}, ..., \mathbf{x}_S^{(B)}]$ émis par chaque source S parmi les M sources $\{S_1,S_2,...,S_M\}$. Cette étape de détection et de décodage conjoint itératif fournit une estimation des mots reçus.

La phase de réception est sous contrôle de l'étape de détection et de décision. Par exemple, le contrôle s'effectue au moyen d'une commande d'arrêt CdeStop. Lorsque la commande d'arrêt CdeStop est valide le relais cesse les itérations de détection et de décodage conjoint.

Le module DDU de détection et de décodage conjoint est illustré par la figure 5, il a une structure itérative constituée d'un détecteur multi utilisateurs SISO (MUD) souple suivi d'autant de décodeurs de canal souples en parallèle que de sources $\{S_1,S_2, ...,S_M\}$. Pour un bloc b reçu, $b \in \{1,2, ..., B\}$, la séquence reçue s'exprime sous la forme :

$$\mathbf{y}_R^{(b)} = \sum_{i=1}^M h_{S_i,R}\mathbf{x}_{S_i}^{(b)} + \mathbf{n}_R^{(b)}$$

dans laquelle $h_{S_i,R} \in \mathbb{C}$ représente le gain de canal entre la source $S_i$ et le relais R et $\mathbf{n}_R^{(b)} \in \mathbb{C}^{N_b}$ représente un bruit additif gaussien. Le module DDU utilise le bloc b courant $\mathbf{y}_R^{(b)}$ et tous les blocs précédemment reçus $\mathbf{y}_R^{(1)}, \mathbf{y}_R^{(2)}, ..., \mathbf{y}_R^{(b-1)}$ pour obtenir une estimation des messages $\hat{\boldsymbol{u}}_{S_1}, \hat{\boldsymbol{u}}_{S_2}, ..., \hat{\boldsymbol{u}}_{S_M}$ des sources.

A la fin de la réception du premier bloc, le détecteur multi utilisateurs MUD calcule sous forme de rapport de vraisemblance (LLR Log-Likelihood-Ratio) la probabilité a posteriori (APP) des bits d'information de chaque bit codé entrelacé de chaque source S :

$$\text{LAPPR} : \Lambda\left[\mathbf{b}_S^{(1)}\right]_k = \log\left(\frac{\Pr\left(\left[\mathbf{b}_S^{(1)}\right]_k = 1 \,|\mathbf{y}_R^{(1)}\right)}{\Pr\left(\left[\mathbf{b}_S^{(1)}\right]_k = 0 \,|\mathbf{y}_R^{(1)}\right)}\right) \qquad k = 1,2, ..., n_{S,1}$$

expression dans laquelle $n_{S,1}$ est le nombre de bits transmis par chaque source S dans le premier bloc. Ce LAPPR peut s'écrire sous la forme :

$$\Lambda \left[ \mathbf{b}_S^{(1)} \right]_k = \Lambda_{\mathrm{a}} \left[ \mathbf{b}_S^{(1)} \right]_k + \Lambda_{\mathrm{e}} \left[ \mathbf{b}_S^{(1)} \right]_k$$

expression dans laquelle $\Lambda_{\mathrm{a}} \left[ \mathbf{b}_S^{(1)} \right]_k$ est le logarithme du rapport de probabilité a priori (LAPR) fournit par le décodeur de canal de chaque source à l'itération précédente, $\Lambda_{\mathrm{e}} \left[ \mathbf{b}_S^{(1)} \right]_k$ est l'information extrinsèque associée au bit $\left[ \mathbf{b}_S^{(1)} \right]_k$.

Le vecteur $\Lambda_{\mathrm{e}} \left[ \mathbf{b}_S^{(1)} \right]_k$ est desentrelacé par un desentrelaceur $\left[ \pi_S^{(1)} \right]^{-1}$, la sortie $\Lambda_{\mathrm{a}} \left[ \mathbf{b}_S^{(1)} \right]_k$ est le log du rapport de probabilité a priori du premier bloc. Le décodeur de canal de la source S utilise $\Lambda_{\mathrm{a}} \left[ \mathbf{b}_S^{(1)} \right]_k$ pour fournir

une version décodée $\hat{\boldsymbol{u}}_{S_1}$ du message $\mathbf{u}_{S_1}$ et pour fournir une information extrinsèque $\Lambda_e \left[ \mathbf{c}_S^{(1)} \right]$ des bits. Cette information extrinsèque est entrelacée par l'entrelaceur $\pi_S^{(1)}$. La sortie $\Lambda_a \left[ \mathbf{b}_S^{(1)} \right]$ de l'entrelaceur est rebouclée sur l'entrée du détecteur multi utilisateurs SISO (MUD) et marque la fin d'une itération.

Les itérations du module DDU s'arrêtent soit parce qu'elles atteignent un nombre maximal d'itérations soit sous contrôle de l'étape de détection d'erreurs et de décision, par exemple parce que l'étape de détection d'erreurs et de décision valide une commande d'arrêt CdeStop.

A la fin de la réception du bloc b, les interrupteurs correspondant à ce bloc b et à tous les blocs précédents sont basculés. La procédure décrite pour le premier bloc est répétée mais en considérant $[\mathbf{b}_S^{(1)}, ..., \mathbf{b}_S^{(b)}]$ en lieu et place de $[\mathbf{b}_S^{(1)}]$.

A la fin de la réception du bloc $b = B - 1$ tous les interrupteurs du DDU sont basculés et la procédure décrite pour le premier bloc est répétée mais en considérant $[\mathbf{b}_S^{(1)}, ..., \mathbf{b}_S^{(B-1)}]$ en lieu et place de $[\mathbf{b}_S^{(1)}]$.

Le module DDU n'utilise pas le dernier bloc $b = B$ puisque même si celui-ci permettait au relais de décoder correctement les messages, le relais ne disposerait plus d'utilisation du canal pour transmettre à la destination un signal représentatif.

L'étape 3 de détection d'erreurs et de décision est mise en oeuvre par le module de décision DU. L'étape 3 détecte les erreurs sur les messages décodés $\hat{\boldsymbol{u}}_{S_1}, \hat{\boldsymbol{u}}_{S_2}, ..., \hat{\boldsymbol{u}}_{SM}$ après chaque itération de détection et de décodage conjoint. Selon un mode de réalisation, cette détection d'erreurs est effectuée en exploitant une information de type CRC incluse dans le premier des B blocs provenant des sources.

Au-delà d'un seuil B1 de blocs reçus, le relais passe d'un mode d'écoute non sélective à un mode d'écoute sélective. Ainsi, après la réception de B1 blocs le relais passe d'un mode de détection et de décodage de toutes les sources sans erreur à un mode de détection et de décodage sélectif d'au moins une source sans erreur, $1 \leq B1 < B - 1$, B1 étant un paramètre dont la valeur peut être fixe ou évoluer de manière dynamique. Par exemple, la valeur de B1 peut être basée sur un critère de priorité entre les messages des sources pour assurer une QoS basée sur la qualité instantanée du canal de transmission entre les sources et le relais, basée sur le niveau de charge de la batterie du relais si celui-ci est un terminal mobile, etc.

Dans le mode d'écoute sélective, dès que le module DU détecte un message décodé sans erreur de décodage parmi les messages $\hat{\boldsymbol{u}}_{S_1}, \hat{\boldsymbol{u}}_{S_2}, ..., \hat{\boldsymbol{u}}_{SM}$, il bascule le relais de la phase de réception à la phase de codage et de transmission, par exemple en validant la commande CdeStop pour stopper les itérations de détection et de décodage conjoint du module DDU et en validant la commande CdeVal. Les messages détectés sans erreur parmi les messages $\hat{\boldsymbol{u}}_{S_1}, \hat{\boldsymbol{u}}_{S_2}, ..., \hat{\boldsymbol{u}}_{SM}$ sont transmis au module ETU.

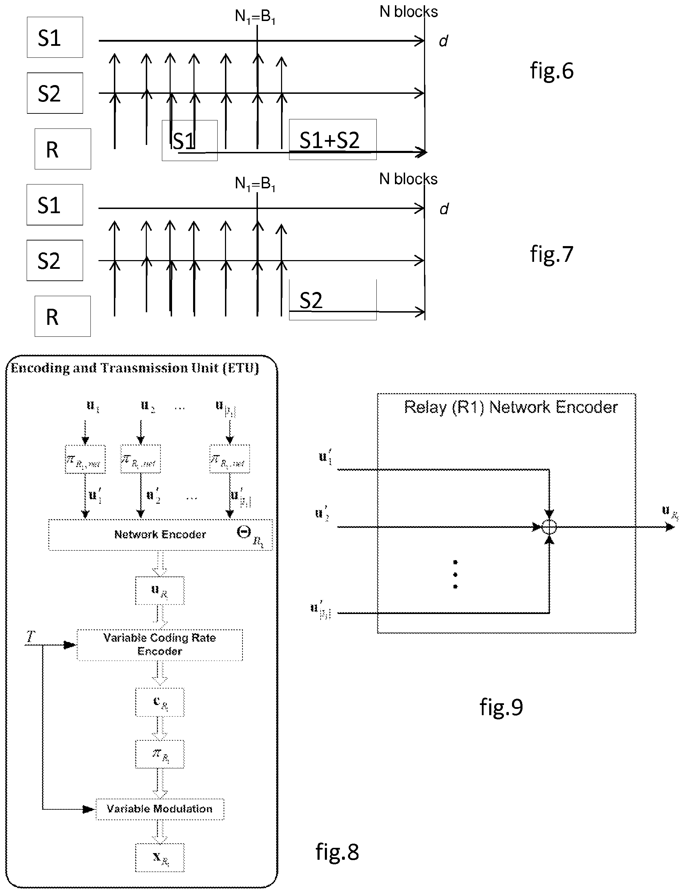

La figure 6 illustre le cas d'un système MARC à deux sources S1 et S2 selon lequel le relais décode sans erreur le message de la source avant le seuil B1 et celui de la source S2 après le basculement en écoute sélective. Dès qu'il détecte sans erreur le message de la source S2 il bascule dans la phase de codage et de transmission des messages de S1 et de S2 et peut stopper les itérations de détection et de décodage conjoint pour éviter des calculs inutiles.

La figure 7 illustre le cas d'un système MARC à deux sources S1 et S2 selon lequel le relais n'arrive pas à décoder sans erreur les messages des deux sources avant le seuil B1. Après ce seuil, le relais passe dans un mode d'écoute sélective et dès qu'il détecte sans erreur le message de la source S2 il bascule dans la phase de codage et de transmission du message de S2 et peut stopper les itérations de détection et de décodage conjoint pour éviter des calculs inutiles.

La phase 4 de codage et de transmission vers le destinataire est mise en oeuvre par le module de codage et de transmission ETU illustré par la figure 8. Cette phase de codage et de transmission code les messages décodés sans erreur pour transmettre un signal représentatif de ces seuls messages décodés sans erreur. Le relais code conjointement les seuls messages décodés sans erreur en ajoutant une redondance propre créant un code de réseau.

Cette phase de codage et de transmission est sous contrôle de l'étape de détection d'erreurs et de décision c'est-à-dire qu'elle n'intervient qu'après le basculement du relais de la phase de réception/écoute à la phase de codage puis de transmission, par exemple lorsque la commande d'autorisation CdeVal est valide. Les commandes d'autorisation CdeVal et d'arrêt CdeStop sont simultanément valides.

Le basculement du relais de la phase de réception/écoute à la phase de codage intervient à la fin de la réception du $T^e$ bloc, $1 \leq T \leq B - 1$ ou n'intervient pas du tout en l'absence de message décodé sans erreur.

Avant le basculement dans la phase de codage et de transmission, le relais dispose donc de k bits d'information par source dont le message est correctement décodé.

Après le basculement, le module ETU dispose des k bits d'information par source dont le message est correctement décodé.

En considérant le relais $R_1$, les messages décodés sans erreur $u_i$ sont d'abord entrelacés avec des entrelaceurs $\pi_{R_1,net}$. Les messages entrelacés $u_i$ sont ensuite codés. Le module ETU effectue un codage qui comprend une combinaison linéaire dans un corps fini de Galois GF (q) des messages décodés sans erreur et entrelacés, cette combinaison $\Theta_{R_1}$ assure un codage conjoint des seuls messages détectés sans erreur en ajoutant une redondance propre créant ainsi un code de réseau.

Considérons le relais Rj, le codage réseau associé est le vecteur $a_j = [a_{1,j} \ a_{2,j} \ \cdots \ a_{M,j}]^T$ de dimension M. Supposons que pour une configuration donnée, ce relais ne détecte que J messages sans erreur dont les indices sont

$$u_{R,j} = \sum_{i \in J_j} a_{i,j} u_i'$$

compris dans l'ensemble $J_j \subset \{1,..M\}$ alors le résultat du codage réseau $u_{R,j}$ est la combinaison linéaire

avec $u_i'$ représentant le message décodé sans erreur puis entrelacé de la source i avec $i \in J_j$. Cela revient à mettre à 0

les coefficients $\{a_{i,j}\}_{i \notin J_j}$ du vecteur $a_j$ dont les indices ne sont pas inclus dans l'ensemble $J_j$. Il vient qu'il est possible de définir un codage réseau effectif pour chaque relais dépendant des messages des sources n'ayant pu être détecté sans erreur (coupure du lien source vers relais correspondant). Dans ce cadre-ci, la non-transmission d'un relais est un codage réseau effectif consistant en un vecteur nul de dimension M. Les vecteurs $u_{R,j}$ peuvent être obtenus à partir de la matrice T tel que :

$$\left[ \tilde{u}_{S_1}', \cdots, \tilde{u}_{S_M}' \right] T = \left[ u_{R_1}, \cdots, u_{R_L} \right]$$

en notant $\hat{u}_{S_1}'$, ..., $\hat{u}_{S_M}'$ les messages décodés puis entrelacés, T la matrice d'encodage de dimension MxL associée à la configuration des coupures des liens sources vers relais considérées, L est le nombre de relais du système MARC. Dans le cas ou le nombre de coupures Q des liens sources vers relais est inférieure ou égale à L, le codage réseau est dit de diversité pleine si et seulement si la matrice

$$G = \left[ \mathbf{I}_M \ \mathbf{T} \right]$$

reste de rang plein M si L-Q colonnes sont supprimées au hasard. Cette propriété est vérifiée pour n'importe quelle configuration de coupure si pour Q=0 (pas de coupure des liens sources vers relais) la matrice :

$$G_0 = \begin{bmatrix} \mathbf{I}_M & \mathbf{T}_0 \end{bmatrix}$$

représente un code Maximum Distance Séparable MDS (Maximum Distance Separable code) de distance minimale L+1 (distance minimale de Hamming). Puisque Q=0, il vient que

$$T_0 = \begin{bmatrix} \mathbf{a}_1 & \mathbf{a}_2 & \cdots \mathbf{a}_L \end{bmatrix}.$$

De manière générale, la fonction $\Theta_R$ est une surjection mais n'est pas une bijection sur les messages détectés sans erreurs, cette fonction est appelée fonction de codage réseau pour $|J_j|>1$ où $|J_j|$ est la cardinalité de l'ensemble $J_j$ En effet, il faut avoir au moins deux messages décodés sans erreur pour pouvoir appliquer un codage réseau.

Selon un mode de réalisation le système MARC a un relais et deux sources.

Le codage réseau $\Theta_{R_1}$ associé, illustré par la figure 8 et détaillé par la figure 9, est le vecteur $\mathbf{a}_1 = [1,...1]^T$ de dimension M dans le corps de Galois à deux éléments, soit F2. Supposons que pour une configuration donnée, ce relais ne détecte que J messages sans erreur dont les indices sont compris dans l'ensemble $J_1 \subset \{1,..M\}$ alors le résultat du codage réseau $u_{R_1}$ dans le mode réception sélective est la combinaison linéaire $u_{R_1} = \Sigma_{i \in J_1} u'_i$; l'addition dans F2 est le XOR. Cela revient à mettre à zéro les coefficients $\{a_{i1}\}_{i \notin J_1}$ du vecteur $a_1$ dont les indices ne sont pas inclus dans l'ensemble $J_1$. Il vient qu'il est possible de définir un codage réseau effectif dépendant des messages des sources n'ayant pu être détecté sans erreur (coupure du lien source vers relais correspondant). Dans ce cadre-ci, la non-transmission d'un relais est un codage réseau effectif consistant en un vecteur nul de dimension M. Le vecteurs $u_R$ peut être obtenu à partir du vecteur T tel que :

$$\begin{bmatrix} \hat{u}'_{S_1}, \cdots, \hat{u}'_{S_M} \end{bmatrix} T = \begin{bmatrix} u_{R_1}, \cdots, u_{R_L} \end{bmatrix}$$

T étant le vecteur d'encodage de dimension M associé à la configuration des coupures des liens sources vers relais considérées. Dans le cas où le nombre de coupures Q des liens sources vers relais est inférieure ou égale à 1, le codage réseau est dit de diversité pleine si et seulement si la matrice :

$$G = \begin{bmatrix} \mathbf{I}_M & \mathbf{T} \end{bmatrix}$$

(où $\mathbf{I}_M$ est la matrice identité de dimension M) reste de rang plein M si 1-Q colonnes sont supprimées au hasard. Cette propriété est vérifiée pour n'importe quelle configuration de coupure si pour Q=0 (pas de coupure des liens sources vers relais) la matrice

$$G_0 = \begin{bmatrix} \mathbf{I}_M & \mathbf{T}_0 \end{bmatrix} = \begin{bmatrix} 1 & 0 & \cdots & 0 & 1 \\ 0 & 1 & \vdots & 0 & 1 \\ \vdots & \vdots & \ddots & \vdots & \vdots \\ 0 & 0 & \cdots & 1 & 1 \end{bmatrix}$$

représente un code MDS de distance minimale deux. Il est clair que $T_0 = \mathbf{a}_1$.

Le codage réseau dans le mode de réception non sélective revient à une non transmission.

Le code $\mathbf{u}_{R_1}$, issu de la fonction $\Theta_{R_1}$, est codé par un codeur canal. Le mot de code obtenu de $n_{R_1}$ bits est noté

$$\mathbf{c}_{R_1}, \ \mathbf{c}_{R_1} \in \mathbb{F}_2^{n_{R_1}}.$$

$$\mathbf{c}_{R_1} = \begin{bmatrix} \mathbf{c}_{R_1}^{(T+1)}, \mathbf{c}_{R_1}^{(T+2)}, ..., \mathbf{c}_{R_1}^{(B)} \end{bmatrix}$$

Ce mot de code peut être représenté sous la forme d'une succession de blocs :

avec $T$ le $T$e intervalle de transmission à l'issu duquel le relais dispose de k bits d'information par message décodé sans erreur. Ce mot $\mathbf{c}_{R_1}$ de code est entrelacé par un entrelaceur $\pi_{R_1}$. Le mot de code entrelacé peut être représenté sous la forme d'une succession de blocs :

$$\mathbf{b}_{R_1} = [\ \mathbf{b}_{R_1}^{(T+1)}, \mathbf{b}_{R_1}^{(T+2)}, \dots, \mathbf{b}_{R_1}^{(B)}]$$

Lorsque le relais dispose de k bits d'information par message décodé sans erreur après le $T^e$ intervalle de transmission alors le relais détermine un ordre de modulation $q_{R_1}$ et une longueur $n_{R_1}$ de codage de canal qui vérifient l'équation : $n_{R_1} = q_{R_1}\left(N - \sum_{i=1}^{T} N_i\right)$ avec $N_i$ les T premières utilisations du canal parmi les N utilisations du canal de transmission successives. La modulation fournit un mot de code complexe noté $\mathbf{x}_{R_1} \in \mathcal{X}^{n_{R_1}/q_{R_1}}$ où $\mathcal{X} \subset \mathbb{C}$

désigne un signal complexe de cardinalité $|\mathcal{X}| = 2^{q_{R_1}}$. Ce mot de code complexe peut être représenté sous la forme

$$\mathbf{x}_{R_1} = [\ \mathbf{x}_{R_1}^{(T+1)}, \mathbf{x}_{R_1}^{(T+2)}, \dots, \mathbf{x}_{R_1}^{(B)}].$$

d'une succession de blocs :

Selon un mode de réalisation, le rendement $k/n_{R_1}$ du codeur canal est fixe donc la longueur $n_{R_1}$ de codage est fixe. L'ordre de modulation est alors variable et fonction du nombre d'utilisations du canal restant pour la transmission du relais, de T+1 à B.

Selon un mode de réalisation, l'ordre $q_{R_1}$ de modulation est fixe. Le rendement du codeur canal $k/n_{R_1}$ et donc la longueur $n_{R_1}$ de codage sont alors variables. Cette variation peut être obtenue par la sélection d'un code parmi des codes déterminés avec des rendements fixes, le code pouvant être choisi parmi la liste non exhaustive suivante : code convolutionnel, Turbo code, code LDPC, etc. Selon une alternative, cette variation peut être obtenue par un code de redondance incrémentale finie.

Selon un mode de réalisation, le rendement $k/n_{R_1}$ du codeur canal et l'ordre $q_{R_1}$ de modulation sont variables.

La destination reçoit les messages émis par les sources et éventuellement le signal transmis par le relais.

Ainsi, en considérant que le relais bascule de la phase d'écoute à la phase de codage et de transmission après le $T^e$ intervalle de transmission alors la séquence reçue par la destination s'écrit :

$$\mathbf{y}_D^{(b)} = \sum_{i=1}^{M} h_{S_i,D}\mathbf{x}_{S_i}^{(b)} + \mathbf{n}_D^{(b)} \text{ avec } b \in \{1, 2, \dots, T\}$$

Après le basculement du relais, la séquence reçue par la destination s'écrit :

$$\mathbf{y}_D^{(b)} = \sum_{i=1}^{M} h_{S_i,D}\mathbf{x}_{S_i}^{(b)} + h_{R,D}\mathbf{x}_R^{(b)} + \mathbf{n}_D^{(b)} \text{ avec } b \in \{T+1, \dots B\}$$

expressions dans lesquelles $h_{S_i,D} \in \mathbb{C}$ représente le gain de canal entre la source Si et la destination D, $h_{R,D} \in \mathbb{C}$

représente le gain de canal entre le relais R et la destination D et $\mathbf{n}_R^{(b)} \in \mathbb{C}^{N_b}$ est un vecteur de bruit.

A la fin des N utilisations du canal de transmission, la destination tente d'extraire les messages de chaque source. En notant les blocs reçus :

$$\mathbf{c}_S^{(I)} = [\mathbf{c}_S^{(1)}, \mathbf{c}_S^{(2)}, \dots, \mathbf{c}_S^{(T)}]$$ jusqu'au $T^e$ intervalle de transmission

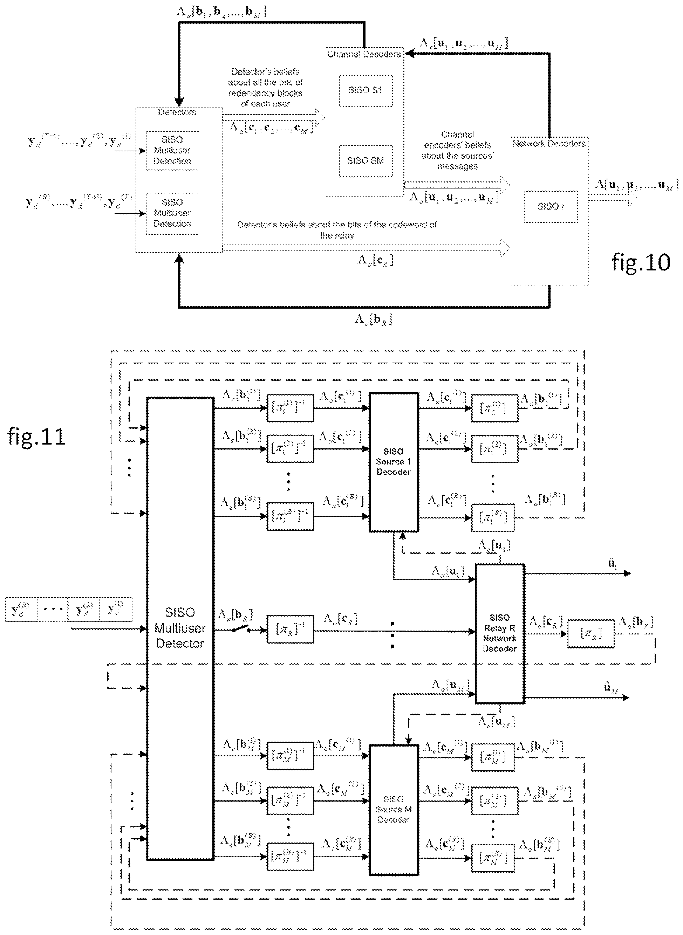

$$\mathbf{c}_S^{(II)} = [\mathbf{c}_S^{(T+1)}, \dots, \mathbf{c}_S^{(B)}]$$ après le $T^e$ intervalle de transmission

alors le fonctionnement du décodeur conjoint canal-réseau de la destination est schématisé par la figure 10.

A chaque itération de décodage :

Etape 1, le détecteur multi utilisateur :

-    calcule les log du rapport de probabilité a priori (LAPR) des mots de code des sources et les transmet aux décodeurs canal,

-   calcule le LAPR du mot de code du relais et le transmet au décodeur réseau,

Etape 2, les décodeurs canal :

-   calculent les LAPR des mots de code entrelacés des sources et les transmettent au détecteur multi utilisateurs,
-   calculent les LAPR des messages des sources et les transmettent au décodeur réseau,

Etape 3, le décodeur réseau calcule :

-   le LAPR du mot de code entrelacé du relais et le transmet au détecteur multi utilisateurs,
-   le LLR extrinsèque des messages des sources et les transmet aux décodeur canal,
-   le LAPPR des messages (décodés) des sources.

La figure 11 est un schéma plus détaillé que la figure 10 du décodeur conjoint canal-réseau de la destination. Ce schéma fait apparaître un interrupteur (breaker). Il est fermé si et seulement si le relais est actif pendant les N utilisations du canal de transmission, c'est-à-dire s'il a pu décoder sans erreur un message et le transmettre. Sinon, l'interrupteur est ouvert et le décodeur réseau SISO n'est pas activé. Dans ce cas, le décodeur se réduit à un détecteur multi utilisateurs (MUD) et décodeur conjoint.

Selon un mode de réalisation le système MARC a plusieurs relais Rj. Le fonctionnement des sources est le même quel que soit le nombre L de relais du système MARC et ceci compte tenu du codage à redondance incrémentale mis en oeuvre par les sources.

Chaque relais peut mettre en oeuvre le procédé de relayage décrit précédemment en ignorant les signaux éventuellement relayés par les autres relais.

Selon un autre mode de réalisation des relais Rj, un relais peut tenir compte du ou des signaux déjà transmis par un ou plusieurs autres relais et un relais envoie un signal représentatif des messages décodés sans erreur non seulement à la destination D mais en outre à destination d'un ou plusieurs autres relais. Selon ce mode, le relais comprend, en référence à la figure 2, un module DDU de détection et de décodage conjoint itératif suivi d'un module DU de décision et puis d'un module ETU de codage et de transmission. Toutefois, comparativement à la figure 2, le module DDU de détection et de décodage conjoint et le module ETU de codage et de transmission comportent certaines particularités.

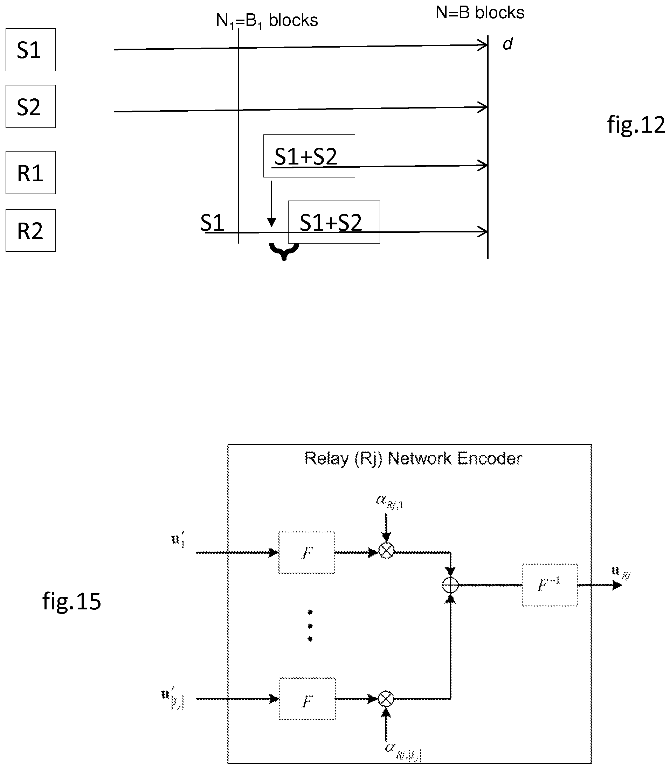

Pour simplifier la description, il est considéré un système MARC à deux relais R1 et R2. A des fins d'illustration, il est considéré que les relais R1 et R2 commencent à transmettre à la fin du bloc T1 respectivement T2 et que $T1 \leq T2$. Une telle situation est illustrée par la figure 12. Selon l'exemple illustré, le relais R1 décode simultanément les deux sources S1 et S2 après le seuil de basculement B1 et avant le relais R2. Le relais R1 commence à transmettre un signal représentatif des messages des sources S1 et S2 alors que le relais R2 a basculé dans la phase d'écoute sélective. Si le lien entre le relais R1 et le relais R2 est de bonne qualité alors le relais R2 peut bénéficier du signal transmis par le relais R1. Ceci peut lui permettre de décoder les deux sources pendant la phase d'écoute sélective alors qu'en l'absence du signal provenant du relais R1 il n'aurait pu décoder qu'une des deux sources, la source S1 selon l'exemple.

La séquence reçue par le relais R2 peut s'écrire :

$$\mathbf{y}_{R_2}^{(b)} = \sum_{i=1}^{M} h_{S_i,R_2} \mathbf{x}_{S_i}^{(b)} + \mathbf{n}_{R_2}^{(b)}$$

pendant la réception des blocs b avec $b \in \{1,2,...,T1\}$.

A la fin du bloc T1, le relais R1 bascule dans la phase de codage et de transmission. Par conséquent, le relais R2 commence à recevoir un signal provenant du relais R1. La séquence reçue par le relais R2 peut s'écrire :

$$\mathbf{y}_{\mathbf{R2}}^{(b)} = \sum_{i=1}^{M} h_{S_i,R2} \mathbf{x}_{S_i}^{(b)} + h_{R1,R2} \mathbf{x}_{\mathbf{R1}}^{(b)} + \mathbf{n}_{\mathbf{R2}}^{(b)}$$

pendant la réception des blocs b avec $b \in \{T1,...,T2\}$,

expressions dans lesquelles $h_{S_i,R2} \in \mathbb{C}$ représente le gain de canal entre la source Si et le relais R2, $h_{R1,R2} \in \mathbb{C}$ représente le gain de canal entre le relais R1 et le relais R2 et $\mathbf{n}_{R1}^{(b)} \in \mathbb{C}^{Nb}$ et $\mathbf{n}_{R2}^{(b)} \in \mathbb{C}^{Nb}$ sont des vecteurs de bruit.

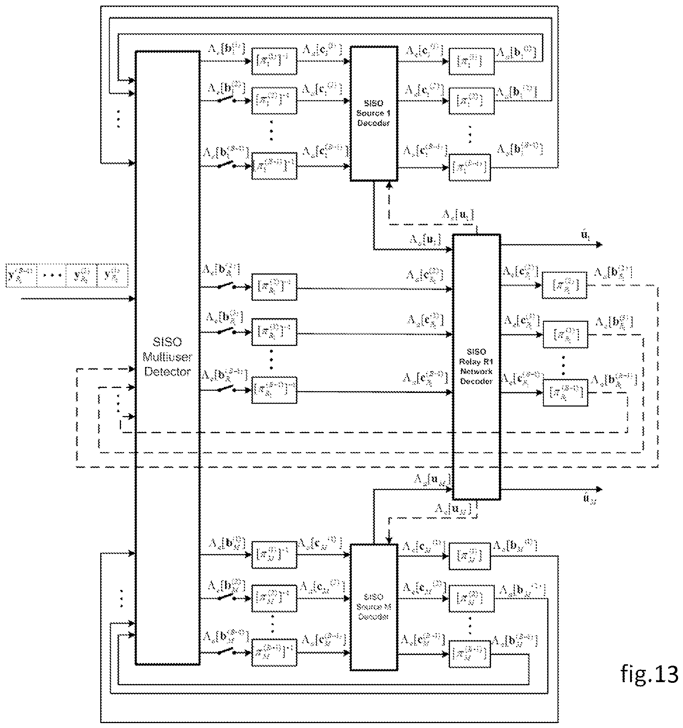

Le module DDU de détection et de décodage conjoint itératif du relais R2 est représenté à la figure 13. Le module DDU utilise tous les blocs précédemment reçus jusqu'au bloc b courant : $\mathbf{y}_{R_2}^{(1)}, \mathbf{y}_{R_2}^{(2)}, ..., \mathbf{y}_{R_2}^{(b)}$ pour extraire l'estimation des messages des sources $\hat{\boldsymbol{u}}_{S_1}, \hat{\boldsymbol{u}}_{S_2}, ..., \hat{\boldsymbol{u}}_{S_M}$. La structure du module DDU et son fonctionnement sont similaires à ceux du module de détection et de décodage conjoint itératif de la destination illustré par la figure 11 dans le cas d'un système MARC à un seul relais. En référence à la figure 13, si la séquence reçue $\mathbf{y}_{R_2}^{(b)}, b = 1, 2, \ldots, B-1$ contient un signal provenant du relais R1 alors l'interrupteur correspondant est fermé. Si un des interrupteurs en amont du décodeur réseau R1 est fermé alors ce décodeur réseau R1 est activé.

Le module DU de décision fonctionne de la même manière que précédemment décrit, il prend une décision sur la base des messages décodés des sources. Le module DU de décision transmet en sortie les messages des sources décodés sans erreur qui sont pris en compte par le module ETU de codage et de transmission après basculement du relais de la phase d'écoute à la phase de codage et de transmission.

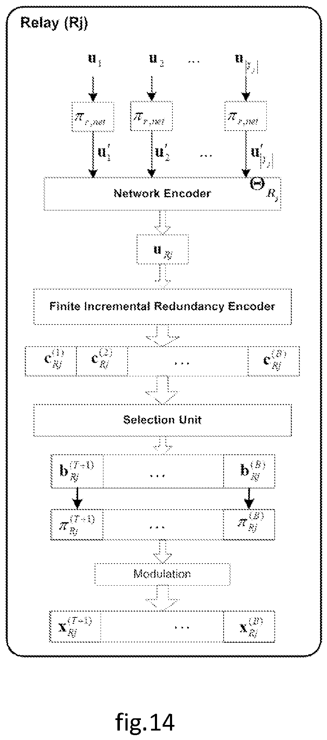

Après le basculement, le module ETU illustré par la figure 14 dispose en entrée des messages de k bits d'information par source dont le message est correctement décodé.

Les messages décodés sans erreur sont d'abord entrelacés puis le module ETU procède à l'encodage réseau.

Considérons le relais Rj, j=1 à L, le codage réseau $\Theta_{R_j}$ associé détaillé par la figure 15 est le vecteur $\mathbf{a}_j = [^a{}_{1,j}$ $^a{}_{2,j} \cdots {}^a{}_{M,j}]^T$ de dimension M dans le corps de Galois à q éléments GF(q) avec q>2. Supposons que pour une configuration donnée, ce relais ne détecte que J messages sans erreur dont les indices sont compris dans l'ensemble $J_j \subset \{1,..M\}$

$$u_{R,j} = \sum_{i \in J_j} a_{i,j} u'_i$$

alors le résultat du codage réseau dans le mode réception sélective $u_{R,j}$ est la combinaison linéaire avec $u'_i$ représentant le message de la source i entrelacé et décodé sans erreur avec $i \in J_j$. Cela revient à mettre à zéro les coefficients $\{a_{i,j}\}_{i \notin J_j}$ du vecteur $a_j$ dont les indices ne sont pas inclus dans l'ensemble $J_j$. Il vient qu'il est possible de définir un codage réseau effectif pour chaque relais dépendant des messages des sources n'ayant pu être détecté sans erreur (coupure du lien source vers relais correspondant). Dans ce cadre-ci, la non-transmission d'un relais est un codage réseau effectif consistant en un vecteur nul de dimension M. De façon implicite les éléments des messages détectés sans erreur appartiennent à GF(q) ce qui peut nécessiter des convertisseurs du corps binaire F2 vers le corps GF(q) et vice versa notés respectivement F et $F^{-1}$ sur la figure 15, un convertisseur faisant correspondre log2(q) bits à un symbole de GF(q). Les vecteurs $u_{R,j}$ peuvent être obtenus à partir de la matrice T tel que

$$\left[ \hat{u}'_{S_1}, \cdots, \hat{u}'_{S_M} \right] T = \left[ u_{R_1}, \cdots, u_{R_L} \right]$$

T étant la matrice d'encodage de dimension MxL associée à la configuration des coupures des liens sources vers relais considérées. Dans le cas ou le nombre de coupures Q des liens sources vers relais est inférieure ou égale à L, le codage réseau est dit de diversité pleine si et seulement si la matrice

$$G = \left[ \mathbf{I}_M \ \mathbf{T} \right]$$

(où $I_M$ est la matrice identité de dimension M) reste de rang plein M si L-Q colonnes sont supprimées au hasard. Cette propriété est vérifiée pour n'importe quelle configuration de coupure si pour Q=0 (pas de coupure des liens sources vers relais) la matrice

$$G_0 = \left[ \mathbf{I}_M \ \ \mathbf{T}_0 \right]$$

représente un code MDS de distance minimale L+1. Puisque Q=0, il vient que

$$T_0 = \left[ \mathbf{a}_1 \ \mathbf{a}_2 \cdots \mathbf{a}_L \right].$$

Le codage réseau dans le mode réception non sélective revient à une non transmission.

Le module ETU met en oeuvre un schéma de codage et de modulation similaire à celui des sources : codage à redondance incrémentale, entrelacement distinct par bloc, modulation. La différence vient de l'ajout d'un module de sélection des blocs à transmettre en fonction du nombre d'utilisations du canal de transmission restant pour la transmission du relais. Ce module de sélection intervient avant entrelacement, il peut tout aussi bien intervenir après l'entrelacement. Le module de codage effectue un codage du message $\mathbf{u}_{R_j}$ au moyen d'un code à redondance incrémentale et transforment le message $\mathbf{u}_{R_j}$ en $n_{R_j}$ bits notés

$$\mathbf{c}_{R_j} \in \mathbb{F}_2^{n_{R_j}}.$$

Le mot $\mathbf{c}_{R_j}$ de code obtenu est segmenté en B' blocs de redondance notés

$$\mathbf{c}_{R_j}^{(i)} \in \mathbb{F}_2^{n_{R_{j,i}}}$$

avec $i = 1, 2, ..., B'$. Chaque bloc comprend $n_{R_{j'}i}$ bits, $n_{R_j} = \sum_{i=1}^{B'} n_{R_{j,i}}$. Le code à redondance incrémentale peut être de type systématique, les bits d'information sont alors inclus dans le premier bloc : $\mathbf{u}_{R_j} \in \mathbf{c}_{R_j}^{(1)}.$ Que le code à redondance incrémentale soit ou pas de type systématique, il est tel que le premier bloc $c_{R_j}^{(1)}$ parmi les B' blocs peut être décodé de manière indépendante des autres blocs. Le rendement le plus élevé est $k/n_{R_{j'}1}$ et il ne peut pas être plus grand que un, $n_{R_{j'}1} > k$. Le rendement minimum pour le relais R est $k/n_{R_j}$. Chaque bloc $\{c_{R_j}^{(i)} : 1 < i \leq B'\}$ suivant le premier bloc comprend des bits de parité qui ajoutent une redondance au premier bloc, chacun des blocs $\{c_{R_j}^{(i)} : 1 < i \leq B'\}$ peut être décodé conjointement avec les blocs 1 à i-1.

Chaque code $\mathbf{c}_{R_j}^{(i)}$ est entrelacé par un entrelaceur distinct noté $\pi_{R_j}^{(i)}.$ Les entrelaceurs permettent de lutter contre les évanouissements qui peuvent intervenir lors de la transmission par le canal et de donner au relais une empreinte qui facilite la séparation des sources et du relais par la destination.

Le module de sélection des blocs à transmettre sélectionne les blocs pouvant être transmis compte tenu du nombre d'utilisations du canal de transmission restant. En considérant que le relais bascule de la phase d'écoute à la phase de codage et de transmission après la réception du bloc T alors il reste B-T utilisations du canal de transmission pour la transmission du relais. Les blocs sélectionnés après entrelacement sont indicés de T+1 à B' : $\mathbf{b}_{R_j}^{(T+1)}, ..., \mathbf{b}_{R_j}^{(B')},$

$$\mathbf{b}_{R_j} = [\mathbf{b}_{R_j}^{(T+1)}, ..., \mathbf{b}_{R_j}^{(B')}].$$

le mot de code correspondant est noté

Chaque partie sélectionnée $\mathbf{b}_{R_j}^{(i)}$ est modulée pour obtenir un mot de code complexe $\mathbf{x}_{R_j} = [\mathbf{x}_{R_j}^{(T+1)}, ..., \mathbf{x}_{R_j}^{(B')}]$ avec $\mathbf{x}_{R_j}^{(i)} \in \mathcal{X}^{N_i}, i = T+1, ..., B'$ où $\mathcal{X} \subset \mathbb{C}$ désigne un signal complexe de cardinalité $|\mathcal{X}| = 2^{q_{R_j}}$ et où $N_i = n_{R_{j,i}}/q_{R_j}$, $q_{R_j}$ étant l'ordre de modulation.

$$\mathbf{x}_{R_j} = [\mathbf{x}_{R_j}^{(T+1)}, ..., \mathbf{x}_{R_j}^{(B')}]$$

Le relais émet le mot de code composé de B' blocs pendant $B' \leq B - T$ utilisations du canal de transmission. Chaque bloc est lui-même un mot de code puisque issu du codeur à redondance incrémentale.

Références :

[1] C. Hausl, F. Schrenckenbach, I. Oikonomidis, G. Bauch, "Iterative network and channel coding on a Tanner graph," Proc. Annual Allerton Conférence on Communication, Control and Computing, Monticello, IL, 2005.

[2] C. Hausl, P. Dupraz, "Joint Network-Channel Coding for the Multiple-Access Relay Channel," Proc. IEEE SECON'06, Reston, VA, Sept. 2006.

[3] S. Yang, R. Koetter, "Network coding over a noisy relay: A belief propagation approach", Proc. IEEE ISIT'07, Nice, France, June 2007.

[4] L.Bahl, J.Cocke, F.Jelinek, and J.Raviv, "Optimal Decoding of Linear Codes for minimizing symbol error rate", IEEE Transactions on Information Theory, vol. IT-20(2), pp.284-287, March 1974

Annexe :

LLR : « Log Likelihood Ratio »
U étant une variable aléatoire binaire, son LLR (Log-likelihood ratio) est définie par la relation :

$$LLR_u = \log\left(\frac{P_U(u=1)}{P_U(u=0)}\right)$$

relation dans laquelle $P_U(u)$ dénote la probabilité que la variable aléatoire U prenne la valeur u.
LAPPR : « Log A Posteriori Probability Ratio »
Il représente le LLR conditionnel à une observation qui correspond généralement à un signal reçu.

$$LAPPR_u = \log\left(\frac{P(u=1\,|y)}{P(u=0|y)}\right)$$

## Revendications

1. Procédé (1) de relayage mis en oeuvre par un relais half-duplex destiné à un système de télécommunication comprenant plusieurs sources, le relais et un destinataire, comprenant :

   - une phase (2) de réception de mots de code émis par les sources pendant N utilisations du canal, les mots de code successifs émis par une source correspondant à B blocs dont le premier bloc peut être décodé de manière indépendante des autres blocs, comprenant une étape de décodage pour estimer par source à partir de mots de code reçus un message associé aux mots de code ($c_S$) émis par la source,
   - une étape (3) de détection d'erreur et de décision par le relais des messages décodés sans erreurs et
   - une phase (4) de codage et de transmission vers le destinataire d'un signal représentatif des seuls messages décodés sans erreur,

   caractérisé en ce que le relais passe d'une réception non sélective à une réception sélective après la réception de B1 blocs et bascule de la phase de réception à la phase de codage et de transmission sous contrôle de l'étape de détection d'erreur et de décision, $1 \leq B1 < B - 1, B > 2$.

2. Procédé (1) selon la revendication 1, dans lequel, les sources émettant simultanément sur une même ressource radio, l'étape de décodage est itérative et comprend une détection conjointe et un décodage conjoint.

3. Procédé (1) selon la revendication 1, dans lequel parmi les B blocs émis successivement par une source, l'accumulation des blocs de 1 à b est un mot de code d'un code dont le rendement diminue avec b, $1 \leq b \leq B$.

4. Procédé (1) selon la revendication 1, dans lequel la phase de codage et de transmission comprend un codage réseau qui est une fonction surjective non bijective appliquée sur les messages décodés sans erreur.

5. Procédé (1) selon la revendication précédente, dans lequel la fonction surjective non bijective est un ou exclusif (XOR) des messages décodés sans erreur.

6. Procédé (1) selon la revendication 3, dans lequel le code est à redondance incrémentale et est un turbo code poinçonné à rendement variable.

7. Procédé (1) selon la revendication 3, dans lequel le code est à redondance incrémentale et est un code convolutionnel poinçonné à rendement variable.

8. Procédé (1) selon la revendication 3, dans lequel le code est à redondance incrémentale et est un code LDPC à rendement variable.

9. Procédé (1) selon la revendication 1, dans lequel lorsque la décision de messages décodés sans erreur intervient après la $T^e$ utilisation du canal alors le relais détermine un ordre de modulation $q_r$ et une longueur $n_r$ de codage de

canal utilisés par l'étape de codage et de transmission qui vérifient l'équation : $n_r = q_r\left(N - \sum_{i=1}^{T} N_i\right)$ avec $N_i$ les T premières utilisations du canal successives parmi les N utilisations du canal.

10. Procédé (1) selon la revendication 1, dans lequel l'étape de détection d'erreur et de décision de messages décodés sans erreurs est effectuée au moyen d'un code de type CRC.

11. Procédé (1) selon la revendication 1, dans lequel la phase de codage et de transmission comprend un codage canal tel que le mot de code codé canal est entrelacé par bloc, chaque bloc du mot de code étant entrelacé par un entrelaceur distinct entre les blocs, et dans lequel la phase de codage et de transmission comprend en outre une sélection de blocs parmi les blocs du mot de code après entrelacement pour adapter la longueur du mot de code à transmettre au nombre d'utilisations du canal restant après le basculement du relais de la phase de réception à la phase de codage et de transmission.

12. Relais (R) half duplex destiné à un système de télécommunication comprenant plusieurs sources, le relais et un destinataire, pour la mise en oeuvre d'un procédé de relayage selon l'une quelconque des revendications 1 à 11, comprenant :

   - un moyen (DDU) de décodage pour estimer par source, à partir de mots reçus correspondant à des mots de code émis par les sources pendant N utilisations du canal, les mots de code successifs émis par une source correspondant à B blocs dont le premier bloc peut être décodé de manière indépendante des autres blocs, un message associé aux mots de code émis par la source,
   - un moyen (ETU) de codage et de transmission,

   **caractérisé en ce qu'**il comprend en outre un moyen (DU) de décision des messages décodés sans erreur pour faire passer le relais d'une réception non sélective à une réception sélective après la réception de B1 blocs et pour basculer un moyen de basculement des messages décodés sans erreur vers le moyen (ETU) de codage et de transmission, $1 \leq B1 < B - 1, B > 2$.

13. Relais (R) selon la revendication précédente dans lequel le moyen (ETU) de codage et de transmission comprend un moyen de modulation et un moyen de codage canal et dans lequel lorsque le moyen de décision prend une décision de basculement après la $T^e$ utilisation du canal alors le relais détermine un ordre de modulation $q_r$ du moyen de modulation et une longueur $n_r$ de codage de canal du moyen de codage canal qui vérifient l'équation :

$$n_r = q_r\left(N - \sum_{i=1}^{T} N_i\right)$$ avec $N_i$ les T premières utilisations du canal parmi les N utilisations du canal successives.

14. Programme d'ordinateur sur un support d'informations, ledit programme comportant des instructions de programme adaptées à la mise en oeuvre d'un procédé de relayage d'un signal numérique selon l'une quelconque des revendications 1 à 11, lorsque ledit programme est chargé et exécuté dans un relais destiné à un système MARC.

15. Support d'informations comportant des instructions de programme adaptées à la mise en oeuvre d'un procédé de relayage d'un signal numérique selon l'une quelconque des revendications 1 à 11, lorsque ledit programme est chargé et exécuté dans un relais destiné à un système MARC.

**Patentansprüche**

1. Übertragungsverfahren (1), das von einem Halb-Duplex-Relais eingesetzt wird, das für ein Telekommunikationssystem, umfassend mehrere Quellen, das Relais und einen Adressaten, bestimmt ist, umfassend:

   - eine Phase (2) des Empfangs von Codewörtern, die von den Quellen während N Verwendungen des Kanals gesandt werden, wobei die aufeinanderfolgenden, von einer Quelle gesandten Codewörter B Blöcken entsprechen, von denen der erste Block unabhängig von den anderen Blöcken decodiert werden kann, umfassend einen Decodierungsschritt, um pro Quelle aus den empfangenen Codewörtern eine Nachricht einzuschätzen, die den von der Quelle gesandten Codewörtern ($c_S$) zugeordnet ist,
   - einen Schritt (3) der Fehlererkennung und Bestimmung der decodierten Nachrichten ohne Fehler durch das Relais, und
   - eine Phase (4) der Codierung und Übertragung eines Signals, das nur für die decodierten Nachrichten ohne Fehler repräsentativ ist, zum Adressaten,

   **dadurch gekennzeichnet, dass** das Relais von einem nicht selektiven Empfang zu einem selektiven Empfang nach dem Empfang von B1 Blöcken übergeht und von der Empfangsphase in die Codierungs- und Übertragungsphase unter Kontrolle des Fehlererkennungs- und Bestimmungsschrittes schwenkt, $1 \leq B1 < B - 1$, $B > 2$.

2. Verfahren (1) nach Anspruch 1, bei dem, wobei die Quellen gleichzeitig auf einer selben Funkressource senden, der Decodierungsschritt iterativ ist und eine gemeinsame Erkennung und eine gemeinsame Decodierung umfasst.

3. Verfahren (1) nach Anspruch 1, bei dem unter den B nacheinander von einer Quelle gesandten Blöcken die Anhäufung der Blöcke von 1 bis b ein Codewort eines Codes ist, dessen Leistung mit b abnimmt, $1 \leq b \leq B$.

4. Verfahren (1) nach Anspruch 1, bei dem die Codierungs- und Übertragungsphase eine Netzcodierung umfasst, die eine surjektive nicht bijektive Funktion ist, die an den decodierten Nachrichten ohne Fehler angewandt wird.

5. Verfahren (1) nach dem vorhergehenden Anspruch, bei dem die surjektive nicht bijektive Funktion eine Exklusiv-Oder-Funktion (XOR) der decodierten Nachrichten ohne Fehler ist.

6. Verfahren (1) nach Anspruch 3, bei dem der Code mit inkrementaler Redundanz ist und ein punktierter Turbocode mit variabler Leistung ist.

7. Verfahren (1) nach Anspruch 3, bei dem der Code mit inkrementaler Redundanz ist und ein punktierter Faltungscode mit variabler Leistung ist.

8. Verfahren (1) nach Anspruch 3, bei dem der Code mit inkrementaler Redundanz ist und ein LDPC-Code mit variabler Leistung ist.

9. Verfahren (1) nach Anspruch 1, bei dem, wenn die Bestimmung von decodierten Nachrichten ohne Fehler nach der T-ten Verwendung des Kanals erfolgt, das Relais einen Modulationsbefehl $q_r$ und eine Kanalcodierungslänge $n_r$ bestimmt, die von dem Codierungs- und Übertragungsschritt verwendet werden, die folgende Gleichung überprüfen:

$$n_r = q_r\left(N - \sum_{i=1}^{T} N_i\right)$$

, wobei $N_i$ die T ersten aufeinanderfolgenden Verwendungen des Kanals unter den N Verwendungen des Kanals sind.

10. Verfahren (1) nach Anspruch 1, bei dem der Schritt der Fehlererkennung und der Bestimmung von decodierten Nachrichten ohne Fehler mit Hilfe eines Codes des Typs CRC erfolgt.

11. Verfahren (1) nach Anspruch 1, bei dem die Codierungs- und Übertragungsphase eine Kanalcodierung umfasst, so dass das codierte Kanalcodewort blockweise verschachtelt ist, wobei jeder Block des Codeworts durch einen zwischen den Blöcken unterschiedlichen Verschachteler verschachtelt ist, und bei dem die Codierungs- und Übertragungsphase ferner eine Auswahl von Blöcken unter den Blöcken des Codeworts nach Verschachtelung umfasst, um die Länge des zu übertragenden Codeworts an die Anzahl von Verwendungen des restlichen Kanals nach dem Schwenken des Relais von der Empfangsphase in die Codierungs- und Übertragungsphase anzupassen.

**12.** Halb-Duplex-Relais (R), das für ein Telekommunikationssystem bestimmt ist, umfassend mehrere Quellen, das Relais und einen Adressaten, für den Einsatz eines Übertragungsverfahrens nach einem der Ansprüche 1 bis 11, umfassend:

- ein Decodierungsmittel (DDU), um pro Quelle aus empfangenen Wörtern, die Codewörtern entsprechen, die von den Quellen während N Verwendungen des Kanals gesandt werden, wobei die aufeinanderfolgenden, von einer Quelle gesandten Codewörter B Blöcken entsprechen, von denen der erste Block unabhängig von den anderen Blöcken decodiert werden kann, eine Nachricht einzuschätzen, die den von der Quelle gesandten Codewörtern zugeordnet ist,
- ein Codierungs- und Übertragungsmittel (ETU),

**dadurch gekennzeichnet, dass** es ferner ein Mittel (DU) zur Bestimmung der decodierten Nachrichten ohne Fehler umfasst, um das Relais von einen nicht selektiven Empfang zu einem selektiven Empfang nach dem Empfang von B1 Blöcken übergehen zu lassen, und um ein Schwenkmittel der decodierten Nachrichten ohne Fehler zu dem Codierungs- und Übertragungsmittel (ETU) zu schwenken, $1 \leq B1 < B-1, B>2$.

**13.** Relais (R) nach dem vorhergehenden Anspruch, bei dem das Codierungs- und Übertragungsmittel (ETU) ein Modulationsmittel und ein Kanalcodierungsmittel umfasst, und bei dem, wenn das Bestimmungsmittel ein Schwenken nach der T-ten Verwendung des Kanals bestimmt, das Relais einen Modulationsbefehl $q_r$ des Modulationsmittels und eine Kanalcodierungslänge $n_r$ des Kanalcodierungsmittels bestimmt, die die folgende Gleichung überprüfen:

$$n_r = q_r \left( N - \sum_{l=1}^{T} N_l \right)$$

, wobei $N_l$ die T ersten aufeinanderfolgenden Verwendungen des Kanals unter den N aufeinanderfolgenden Verwendungen des Kanals sind.

**14.** Computerprogramm auf einem Informationsträger, wobei das Programm Programmanweisungen umfasst, die an den Einsatz des Verfahrens zur Übertragung eines digitalen Signals nach einem der Ansprüche 1 bis 11 angepasst sind, wenn das Programm in ein Relais, das für ein MARC-System bestimmt ist, geladen ist und von diesem ausgeführt wird.

**15.** Informationsträger, umfassend Programmanweisungen, die an den Einsatz eines Verfahrens zur Übertragung eines digitalen Signals nach einem der Ansprüche 1 bis 11 angepasst sind, wenn das Programm in ein Relais, das für ein MARC-System bestimmt ist, geladen ist und von diesem ausgeführt wird.

**Claims**

**1.** Relaying method (1) implemented by a half-duplex relay intended for a telecommunications system comprising several sources, the relay and a recipient, comprising:

- a phase (2) for receiving code words transmitted by the sources during N uses of the channel, the successive code words transmitted by a source corresponding to B blocks whose first block may be decoded independently of the other blocks, comprising a decoding step for estimating per source, from code words received, a message associated with the code words ($c_s$) transmitted by the source,
- a step (3) for error detection and for decision by the relay for the messages decoded without errors and
- a phase (4) for coding and for transmission to the recipient of a signal representative only of the messages decoded without error,

**characterized in that** the relay goes from a non-selective reception to a selective reception after the receipt of B1 blocks and switches from the reception phase to the coding and transmission phase under the control of the error detection and decision step, $1 \leq B1 < B - 1, B > 2$.

**2.** Method (1) according to Claim 1, in which, the sources simultaneously transmitting over the same radio resource, the decoding step is iterative and comprises a joint detection and a joint decoding.

**3.** Method (1) according to Claim 1, in which, amongst the B blocks successively transmitted by a source, the accumulation of the blocks from 1 to b is a code word of a code whose rate decreases with b, $1 \leq b < B$.

4. Method (1) according to Claim 1, in which the coding and transmission phase comprises a network coding which is a one-to-many not one-to-one function applied to the messages decoded without error.

5. Method (1) according to the preceding claim, in which the one-to-many not one-to-one function is an exclusive OR (XOR) of the messages decoded without error.

6. Method (1) according to Claim 3, in which the code is a code with incremental redundancy and is a punctured turbo code with variable rate.

7. Method (1) according to Claim 3, in which the code is a code with incremental redundancy and is a punctured convolutional code with variable rate.

8. Method (1) according to Claim 3, in which the code is a code with incremental redundancy and is an LDPC code with variable rate.

9. Method (1) according to Claim 1, in which, when the decision for messages decoded without error takes place after the $T^{th}$ use of the channel, then the relay determines a modulation order $q_r$ and a channel coding length $n_r$ used by the coding and transmission step which verify the equation:

$$n_r = q_r \left( N - \sum_{i=1}^{T} N_i \right)$$

with $N_i$ the first T successive uses of the channel from amongst the N uses of the channel.

10. Method (1) according to Claim 1, in which the error detection and decision step for messages decoded without errors is carried out by means of a code of the CRC type.

11. Method (1) according to Claim 1, in which the coding and transmission phase comprises a coding channel such that the channel coded code word is interleaved by block, each block of the code word being interleaved by a separate interleaver between the blocks, and in which the coding and transmission phase furthermore comprises a selection of blocks from amongst the blocks of the code word after interleaving so as to adapt the length of the code word to be transmitted to the number of uses of the channel remaining after the switching of the relay from the reception phase to the coding and transmission phase.

12. Half-duplex relay (R) designed for a telecommunications system comprising several sources, the relay and a recipient, for the implementation of a relaying method according to any one of Claims 1 to 11, comprising:

   - a decoding means (DDU) for estimating per source, based on received words corresponding to code words transmitted by the sources during N uses of the channel, the successive code words transmitted by a source corresponding to B blocks whose first block may be decoded independently of the other blocks, a message associated with the code words transmitted by the source,
   - a coding and transmission means (ETU),

   **characterized in that** it furthermore comprises a decision means (DU) for the messages decoded without error so as to make the relay go from a non-selective reception to a selective reception after the receipt of B1 blocks and for switching a means of switching the messages decoded without error to the coding and transmission means (ETU), $1 \leq B1 < B - 1, B > 2$.

13. Relay (R) according to the preceding claim in which the coding and transmission means (ETU) comprises a modulation means and a channel coding means and in which, when the decision means takes a switching decision after the $T^{th}$ use of the channel, the relay then determines a modulation order $q_r$ of the modulation means and a channel coding length $n_r$ for the channel coding means which verify the equation:

$$n_r = q_r \left( N - \sum_{i=1}^{T} N_i \right)$$

with Ni the first T uses of the channel from amongst the N successive uses of the channel.

14. Computer programme on an information medium, the said programme comprising programme instructions designed for the implementation of a relaying method for a digital signal according to any one of Claims 1 to 11, when the said programme is loaded and executed in a relay designed for a MARC system.

15. Information medium comprising programme instructions designed for the implementation of a relaying method for a digital signal according to any one of Claims 1 to 11, when the said programme is loaded and executed in a relay designed for a MARC system.

fig.1

CdeStop  CdeVal

$\mathbf{y}_R = [\mathbf{y}_R^{(1)}, \mathbf{y}_R^{(2)}, \ldots, \mathbf{y}_R^{(B-1)}]$

fig.2

Relay (R)

Detection and Decoding Unit (DDU)

Decision Unit (DU)

Encoding and Transmission Unit (ETU)

$\mathbf{x}_R$

$\mathbf{u}_1, \mathbf{u}_2, \ldots, \mathbf{u}_B$

$\hat{\mathbf{u}}_{S_1}, \hat{\mathbf{u}}_{S_2}, \ldots, \hat{\mathbf{u}}_{S_N}$

1

$\mathbf{y}_R = [\mathbf{y}_R^{(1)}, \mathbf{y}_R^{(2)}, \ldots, \mathbf{y}_R^{(B-1)}]$

2

3

4

fig.3

$\mathbf{x}_R$

fig.4

fig.5

N₁=B₁ ... N blocks

fig.6

fig.7

Encoding and Transmission Unit (ETU)

Relay (R1) Network Encoder

fig.9

fig.8

fig.10

fig.11

N₁=B₁ blocks $N_1=B_1$ blocks

N=B blocks $N=B$ blocks

S1

S2

R1

R2

S1+S2

S1    S1+S2

d

fig.12

Relay (Rj) Network Encoder

$\mathbf{u}'_1$

$F$

$\alpha_{Rj,1}$

$\otimes$

$\oplus$

$F^{-1}$

$\mathbf{u}_{Rj}$

$\mathbf{u}'_{b_{rj}}$

$F$

$\otimes$

$\alpha_{Rj,b_{rj}}$

fig.15

fig.13

fig.14

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2012022905A1 A
- WO 2013093359A1 A

**Littérature non-brevet citée dans la description**

- **C. HAUSL ; F. SCHRENCKENBACH ; I. OIKONOMIDIS ; G. BAUCH.** Iterative network and channel coding on a Tanner graph. *Proc. Annual Allerton Conférence on Communication, Control and Computing,* 2005
- **C. HAUSL ; P. DUPRAZ.** Joint Network-Channel Coding for the Multiple-Access Relay Channel. *Proc. IEEE SECON'06,* Septembre 2006
- **S. YANG ; R. KOETTER.** Network coding over a noisy relay: A belief propagation approach. *Proc. IEEE ISIT'07,* Juin 2007
- **L.BAHL ; J.COCKE ; F.JELINEK ; J.RAVIV.** Optimal Decoding of Linear Codes for minimizing symbol error rate. *IEEE Transactions on Information Theory,* Mars 1974, vol. IT-20 (2), 284-287